# EUROPÄISCHE PATENTSCHRIFT

(11) **EP 3 058 264 B1**
(45) Veröffentlichungstag und Bekanntmachung des Hinweises auf die Patenterteilung: **05.06.2019**
(21) Anmeldenummer: 14781205.1
(22) Anmeldetag: 07.10.2014
(51) Int. Cl.: F16P 3/14, B23Q 11/00

(54) **VORRICHTUNG ZUM SCHUTZ VOR VERLETZUNGEN EINER BEDIENPERSON DURCH EINE WERKZEUGMASCHINE UND VERFAHREN HIERZU**
DEVICE TO PREVENT INJURY OF AN OPERATOR BY A MACHINE TOOL AND A METHOD THEREFOR
DISPOSITIF POUR ÉVITER TOUTE BLESSURE D'UN OPÉRATEUR PAR UN OUTIL DE MACHINE ET LE PROCÉDÉ CORRESPONDANT

(30) Priorität: 17.10.2013 DE 102013221128
(43) Veröffentlichungstag der Anmeldung: 24.08.2016
(73) Patentinhaber: Robert Bosch GmbH, 70442 Stuttgart (DE)
(72) Erfinder: ZIPF, Philipp, 70435 Stuttgart-Zuffenhausen (DE); SCHADOW, Joachim, 70563 Stuttgart (DE)
(86) Internationale Anmeldenummer: PCT/EP2014/071435
(87) Internationale Veröffentlichungsnummer: WO 2015/055465

(56) Entgegenhaltungen:
- WO-A1-2011/091976
- US-A1- 2005 114 154
- US-A1- 2010 271 208
- US-A1- 2012 319 846
- US-B1- 7 298 258

## Beschreibung

### Stand der Technik

Aus DE 10 2007 035 822 A1, US 2012/319846 A1, US 2010/271208 A1, WO 2011/091976 A1 und US2005/114154 A1 ist bereits eine Vorrichtung und ein Verfahren zum Schutz vor Verletzungen einer Bedienperson durch eine Werkzeugmaschine mit zumindest einer in einer Bekleidungseinheit angeordneten Sensoreinheit zu einer Erfassung von zumindest einer Kenngröße, und mit zumindest einer Auswerteeinheit zu einer Auswertung der zumindest einen erfassten Kenngröße bekannt. Die Sensoreinheit der Vorrichtung weist Leiterschleifen auf, die aus metallischen Leitern bestehen und mit der Auswerteeinheit verbunden sind. Die Leiterschleifen bilden einen Teil eines Gewebes oder Gewirks der Bekleidungseinheit und sind an denjenigen Stellen der Bekleidungseinheit angeordnet, an denen ein Kontakt mit der Werkzeugmaschine möglich oder wahrscheinlich ist. Die als Kettensäge ausgebildete Werkzeugmaschine umfasst in regelmäßigen Abständen entlang eines Sägeschwerts eine Mehrzahl von Sendern, die nach beiden Seiten des Sägeschwerts hochfrequente Wechselfelder erzeugen. Die Auswerteeinheit wertet die von den hochfrequenten Wechselfeldern der Sender in den Leiterschleifen induzierte Spannung bzw. die erfassten Kenngrößen aus und vergleicht sie mit den vorbestimmten Kenngrößen. Wenn die erfassten Kenngrößen in einer oder mehreren Leiterschleifen die vorbestimmte Kenngröße übersteigen, ist der gewünschte Mindestsicherheitsabstand zwischen dem Sägeschwert und der Bekleidungseinheit an mindestens einer Stelle unterschritten und es besteht die Gefahr eines Kontakts zwischen dem Sägeschwert der Werkzeugmaschine und der Bekleidungseinheit. Um eine Verletzung der Bedienperson sicher zu verhindern, wird ein Abschaltsignal an die Motorsteuerung der Werkzeugmaschine übertragen und die Werkzeugmaschine wird abgeschaltet.

### Offenbarung der Erfindung

Die Erfindung geht aus von einer Vorrichtung zum Schutz vor Verletzungen einer Bedienperson durch eine Werkzeugmaschine, insbesondere durch eine Handwerkzeugmaschine, mit zumindest einer an einer Bekleidungseinheit angeordneten Sensoreinheit zu einer Erfassung von zumindest einer Kenngröße, und mit zumindest einer Auswerteeinheit zu einer Auswertung der zumindest einen erfassten Kenngröße.

Es wird vorgeschlagen, dass die Sensoreinheit dazu vorgesehen ist, personenbezogene Kenngrößen zu erfassen. Insbesondere soll unter einer "Werkzeugmaschine" eine werkstückbearbeitende tragbare Maschine, vorteilhaft jedoch eine Kettensäge, eine Kreissäge, eine Bohrmaschine, ein Bohrhammer, ein Schlaghammer, ein Hobel, ein Schrauber, eine Fräse, ein Schleifer, ein Winkelschleifer, ein Gartengerät und/oder ein Multifunktionswerkzeug verstanden werden. Unter einer "Sensoreinheit" soll in diesem Zusammenhang insbesondere eine Einheit verstanden werden, die dazu vorgesehen ist, zumindest eine Kenngröße und/oder eine physikalische Eigenschaft zu erfassen, wobei eine Erfassung aktiv, wie insbesondere durch das Erzeugen und Aussenden eines elektrischen Messsignals, und/oder passiv, wie insbesondere durch eine Erfassung von Eigenschaftsänderungen eines Sensorelements und/oder durch eine Erfassung eines über einen Widerstand fließenden Stroms und/oder einer Spannung, stattfinden kann. Beispielsweise ist die personenbezogene Kenngröße als Information über eine Körperhaltung oder über einen Zustand oder über eine Lage einer Bedienperson der Werkzeugmaschine ausgebildet. Insbesondere können vorteilhaft aktuelle Kenngrößen der Sensoreinheit aktiv erfasst werden. Dadurch kann insbesondere erreicht werden, dass die Werkzeugmaschine besonders sicher und einfach beeinflusst werden kann, bevor die Bedienperson eine Gefahr erkennt oder dieser ausgesetzt wird. Durch die erfindungsgemäße Ausgestaltung der Vorrichtung ist eine besonders schnelle Beeinflussung der Werkzeugmaschine ohne konkretes Wissen einer Bedienperson über die Sensoreinheit möglich. Vorzugsweise ist die Sensoreinheit in ein Gewebe oder ein Gewirk der Bekleidungseinheit eingearbeitet. Die Sensoreinheit umfasst zumindest ein Sensorelement. Unter "vorgesehen" soll insbesondere speziell programmiert, speziell ausgelegt und/oder speziell ausgestattet verstanden werden. Insbesondere soll unter einer "personenbezogenen Kenngröße" zumindest eine Information über einen Zustand bzw. eine Befindlichkeit einer Bedienperson verstanden werden, die zumindest eine Bewegungskenngröße und/oder eine Vitalfunktionskenngröße bzw. eine Lebensfunktionskenngröße und/oder eine Körperhaltungskenngröße umfasst. Vorteilhaft weist die personenbezogene Kenngröße eine eindeutige Information zum Standort der Bedienperson auf, insbesondere eine geographische Koordinatenkenngröße des Standorts. Des Weiteren kann die Kenngröße weitere, dem Fachmann als sinnvoll erscheinende Informationen umfassen. Zur Erfassung der personenbezogenen Kenngröße können bei der Sensoreinheit unterschiedliche Verfahren eingesetzt werden. Unter einer "Erfassung" soll in diesem Zusammenhang insbesondere ein Registrieren der erfassten personenbezogenen Kenngrößen der zumindest einen Sensoreinheit verstanden werden. Ferner soll unter einer "Auswertung" in diesem Zusammenhang insbesondere ein Vergleichen der erfassten personenbezogenen Kenngrößen mit zumindest einer in der Auswerteeinheit gespeicherten vorbestimmten Kenngröße und ein Erzeugen eines von einem Ergebnis des Vergleichs abhängigen Signals verstanden werden. Insbesondere ist die Auswerteeinheit dazu vorgesehen, die erfassten personenbezogenen Kenngrößen der Sensoreinheit, welche durch die Bedienperson der Werkzeugmaschine erzeugt werden, mit den in der Auswerteeinheit gespeicherten bzw. hinterlegten vorbestimmten Kenngrößen der Sensoreinheit zu vergleichen und bei Überschreitung der vorbestimmten Kenngröße der Sensoreinheit ein Signal auszugeben. Durch die erfindungsgemäße Ausgestaltung der Vorrichtung ist eine permanente Überwachung der Bedienperson vor, während und nach einem Bearbeitungsvorgang mit einer Werkzeugmaschine möglich, wodurch ein aktiver Schutz vor Verletzungen der Bedienperson bereitgestellt werden kann. In vorteilhafter Weise kann dadurch eine gefährliche Situation rechtzeitig erkannt bzw. vermieden und ein Zustand der Bedienperson ständig kontrolliert werden. Insbesondere handelt es sich bei der Bekleidungseinheit um eine sicherheitsrelevante persönliche Schutzausrüstung der Bedienperson gegen drohende Gefährdungen, die beispielsweise als eine Jacke und/oder als eine Hose und/oder als ein Overall und/oder als ein Handschuh und/oder als ein Schutzhelm und/oder als ein Schuh und/oder als Gürtel und/oder als Armband ausgeführt ist. Es können alle oder unterschiedliche Körperteile der Bedienperson vor einem Kontakt mit einem Bearbeitungswerkzeug und eine aus dem Kontakt folgende drohende Gefährdung bzw. Verletzung geschützt werden.

Des Weiteren wird vorgeschlagen, dass die Sensoreinheit zur Erfassung ruckartiger Bewegungen der Bedienperson zumindest ein Beschleunigungssensorelement umfasst. Insbesondere ist das Beschleunigungssensorelement dazu vorgesehen, eine Beschleunigung bzw. eine Geschwindigkeitszunahme oder Geschwindigkeitsabnahme der Bedienperson als eine personenbezogene Kenngröße, insbesondere als eine Bewegungskenngröße, in Abhängigkeit der Bewegung der Bedienperson zu erfassen. Die erfassten personenbezogenen Kenngrößen des Beschleunigungssensorelements können permanent an die Auswerteeinheit ausgegeben werden, welche die erfassten personenbezogenen Kenngrößen des Beschleunigungssensorelements mit der zumindest einen in der Auswerteeinheit gespeicherten vorbestimmten Kenngröße des Beschleunigungssensorelements vergleichen und bei Überschreitung der vorbestimmten Kenngröße des Beschleunigungssensorelements ein Signal ausgeben kann. Insbesondere kann eine von einer gleichmäßigen Bewegung abweichende Bewegung der Bedienperson registriert werden, indem die auf einen Körperteil der Bedienperson wirkende Trägheitskraft bestimmt wird. Vorzugsweise ist das Beschleunigungssensorelement im Bereich der Hände und/oder der Füße und/oder des Kopfes in der Bekleidungseinheit der Bedienperson angeordnet, wodurch die ruckartigen Bewegungen eindeutig erfasst werden können. In einer alternativen Ausführung kann das Beschleunigungssensorelement an einem Handgelenk und/oder an einem Arm der Bedienperson angeordnet sein. In einer weiteren alternativen Ausführung kann das Beschleunigungssensorelement in einer Uhr integriert oder als eine Uhr bzw. als ein Armband ausgebildet sein. In vorteilhafter Weise können ein oder mehrere Beschleunigungssensorelemente mit der Auswerteeinheit drahtgebunden und/oder drahtlos verbunden werden. Vorzugsweise ist das Beschleunigungssensorelement in der Bekleidungseinheit drahtgebunden ausgeführt. Insbesondere kann die handgeführte Werkzeugmaschine bei ruckartigen Bewegungen der Bedienperson automatisch deaktiviert werden, wenn beispielsweise die Bedienperson während eines Bearbeitungsvorgangs einen Rückschlag eines Winkelschleifers abfangen muss oder eine Sägekette der Motorsäge schlagartig reißt oder ein Kickback der Motorsäge infolge eines Einklemmens der Sägekette erfolgt. Die Beschleunigungssensorelemente können auf Grund ihrer geringen Größe besonders vorteilhaft in einer Bekleidungseinheit integriert werden. Insbesondere weist das Beschleunigungssensorelement ein besonders geringes Gewicht und eine hohe Zuverlässigkeit auf. Es kann insbesondere ein erhöhter Bedienkomfort erreicht werden. Ferner sind die Herstellungskosten der Beschleunigungssensorelemente niedrig, wodurch die Ausstattung der Bekleidungseinheit mit Beschleunigungssensorelementen besonders kostengünstig realisiert werden kann.

Es wird ferner vorgeschlagen, dass die Sensoreinheit zur Erfassung einer horizontalen und/oder einer vertikalen Lage und/oder einer geographischen Position der Bedienperson zumindest ein Lagesensorelement oder ein GPS-Sensorelement (GPS = Global Positioning System) umfasst. Das Lagesensorelement ist dazu vorgesehen, einen Neigungswinkel, eine Winkelmessung oder eine Ortung der Bedienperson als eine personenbezogene Kenngröße zu erfassen, insbesondere als eine Körperhaltungskenngröße. Die Körperhaltungskenngröße gibt eine Information über die Haltung bzw. über die Lage der Bedienperson in Abhängigkeit zu einem Untergrund, auf der die Bedienperson während eines Bearbeitungsvorgangs steht. Die erfassten personenbezogenen Kenngrößen des Lagesensorelements können permanent an die Auswerteeinheit ausgegeben werden, welche die erfassten personenbezogenen Kenngrößen des Lagesensorelements mit der zumindest einen in der Auswerteeinheit gespeicherten vorbestimmten Kenngröße des Lagesensorelements vergleichen und bei Überschreitung der vorbestimmten Kenngröße des Lagesensorelements ein Signal ausgeben kann. Das GPS-Sensorelement ist dazu vorgesehen, eine Ortung der Bedienperson als eine personenbezogene Kenngröße zu erfassen, insbesondere als eine geographische Koordinatenkenngröße. Die erfassten personenbezogenen Kenngrößen des GPS-Sensorelements können permanent an die Auswerteeinheit ausgegeben werden und in einem Notfall ausgelesen werden. Im Rahmen der Erfindung kann ein solches Sensorelement unter Sicherheits- und Komfortaspekten genutzt werden. In vorteilhafter Weise können ein oder mehrere Lagesensorelemente oder GPS-Sensorelemente mit der Auswerteeinheit drahtgebunden und/oder drahtlos verbunden werden. Vorzugsweise ist das Lagesensorelement oder das GPS-Sensorelement in der Bekleidungseinheit drahtgebunden ausgeführt. Die Werkzeugmaschine, insbesondere eine handgeführte Werkzeugmaschine, kann bei irregulären Handhabungsgegebenheiten automatisch deaktiviert werden, wenn beispielsweise die Bedienperson während eines Bearbeitungsvorgangs stolpert und mit der Werkzeugmaschine fällt. Insbesondere ist das Lagesensorelement oder das GPS-Sensorelement in der Bekleidungseinheit integriert und gegen äußere Einflüsse geschützt angeordnet. In einer alternativen Ausführung kann das Lagesensorelement oder das GPS-Sensorelement an einem Handgelenk und/oder an einem Arm der Bedienperson angeordnet sein. In einer weiteren alternativen Ausführung kann das Lagesensorelement oder das GPS-Sensorelement in einer Uhr integriert oder als eine Uhr bzw. als ein Armband ausgebildet sein.

Ferner wird vorgeschlagen, dass die Sensoreinheit zur Erfassung einer Vitalfunktion der Bedienperson zumindest ein Vitalsensorelement umfasst. Vorzugsweise soll unter einer "Vitalfunktion" insbesondere eine Herzfrequenz und/oder ein Kreislauf und/oder ein arterieller Puls und/oder ein arterieller Blutdruck und/oder eine Atmung und/oder eine Körpertemperatur der Bedienperson verstanden werden. Insbesondere ist das Vitalsensorelement dazu vorgesehen, die Vitalfunktionen der Bedienperson als eine personenbezogene Kenngröße zu erfassen, insbesondere als eine Vitalfunktionskenngröße. Die erfassten personenbezogenen Kenngrößen des Vitalsensorelements können permanent an die Auswerteeinheit ausgegeben werden, welche die erfassten personenbezogenen Kenngrößen des Vitalsensorelements mit der zumindest einen in der Auswerteeinheit gespeicherten vorbestimmten Kenngröße des Vitalsensorelements vergleicht und bei Überschreitung der vorbestimmten Kenngröße des Vitalsensorelements ein Signal ausgeben kann. Insbesondere ermöglicht das Vitalsensorelement eine permanente Überwachung mit einer ständigen Kontrolle der Lebensfunktionen der Bedienperson. In vorteilhafter Weise können ein oder mehrere Vitalsensorelemente mit der Auswerteeinheit drahtgebunden und/oder drahtlos verbunden werden. Vorzugsweise ist das Vitalsensorelement in der Bekleidungseinheit drahtgebunden ausgeführt. Insbesondere weist jede Bekleidungseinheit zumindest ein Vitalsensorelement auf, das im angezogenen Zustand automatisch aktivierbar ist. Alternativ weist zumindest eine Bekleidungseinheit ein Vitalsensorelement auf, das die Bedienperson anziehen muss, um die Werkzeugmaschine zu aktivieren. Insbesondere kann die Werkzeugmaschine nur dann aktiviert werden, wenn die Bedienperson die Bekleidungseinheit anzieht. Insbesondere kann die bestimmte Werkzeugmaschine nur dann aktiviert werden, wenn die Bedienperson die für die Werkzeugmaschine vorgesehene Bekleidungseinheit mit einem Vitalsensorelement anzieht. Insbesondere ist die Werkzeugmaschine deaktiviert, wenn die Bedienperson die Bekleidungseinheit auszieht. Insbesondere kann das Vitalsensorelement Bestandteil eines Gürtels sein. In einer alternativen Ausführung kann das Vitalsensorelement an einem Handgelenk und/oder an einem Arm der Bedienperson angeordnet sein. In einer weiteren alternativen Ausführung kann das Vitalsensorelement in einer Uhr integriert oder als eine Uhr bzw. als ein Armband ausgebildet sein. Insbesondere kann das Vitalsensorelement die Bedienperson vor Überlastung schützen, indem bei einer vorbestimmten personenbezogenen Kenngröße eine Deaktivierung der Werkzeugmaschine erfolgt bzw. eine Inbetriebnahme bzw. eine Aktivierung der Werkzeugmaschine nicht möglich ist. Insbesondere kann das Vitalsensorelement die Bedienperson vor Überlastung schützen, indem nach vorgegebener Bearbeitungsdauer eine Deaktivierung der Werkzeugmaschine erfolgt und eine Pause bzw. ein Arbeitsende vorgesehen ist. In vorteilhafter Weise können durch das Vitalsensorelement gefährliche Situationen rechtzeitig erkannt und vermieden werden. Insbesondere kann das Vitalsensorelement Vitalfunktionen von einer verletzten und/oder bewusstlosen Bedienperson erkennen, aufnehmen und übermitteln. In vorteilhafter Weise können bei einem Notfall die erfassten Vitalfunktionen im Rahmen der ersten Hilfe gezielt für Sofortmaßnahmen vor Ort genutzt werden. Insbesondere können die Arbeitskollegen vor Ort von einem Arzt über lebensrettende Sofortmaßnahmen zur Sicherstellung der Vitalfunktionen telefonisch angewiesen werden, bevor der Arzt bei der verletzten Person eintrifft. Vor den Sofortmaßnahmen kann ein Notruf und das schnelle Herbeirufen des Rettungsdienstes einschließlich des Notarztes automatisch erfolgen. Insbesondere ermöglicht das Vitalsensorelement bei einer Störung oder gar Unterbrechung der Vitalfunktion der Bedienperson eine Einleitung lebensrettender Sofortmaßnahmen zur Rettung der Bedienperson. Der Aufwand, die Bekleidungseinheit mit personenbezogenen Sensoreinheiten herzustellen, entsteht nur ein Mal und ermöglicht ein geschlossenes Sicherheitssystem zwischen Mensch und Maschine.

Vorzugsweise umfasst die Sensoreinheit das Beschleunigungssensorelement, das Lagesensorelement, das GPS-Sensorelement und das Vitalsensorelement, wobei jedoch auch andere, einem Fachmann als sinnvoll erscheinende Sensorelemente denkbar sind.

Es wird ferner vorgeschlagen, dass die Vorrichtung eine Empfangseinheit zum Empfangen von der zumindest einen erfassten personenbezogenen Kenngröße von der Auswerteeinheit umfasst. Insbesondere erfolgt die Übertragung der personenbezogenen Kenngrößen von der Auswerteeinheit der Vorrichtung zur Empfangseinheit drahtgebunden und/oder drahtlos. Vorzugsweise ist die Empfangseinheit in der Bekleidungseinheit drahtgebunden ausgeführt und im Bereich der Brusttasche oder im Bereich eines Hosengürtels angeordnet. In vorteilhafter Weise kann eine Auswerteeinheit oder es können mehrere Auswerteeinheiten mit der Empfangseinheit verbunden werden. Insbesondere ist die Empfangseinheit automatisch beim Empfang der ersten personenbezogenen Kenngröße durch die Auswerteeinheit aktivierbar und nach einer vorbestimmten Zeit bei Ausbleiben des Empfangs von personenbezogenen Kenngrößen vor der Deaktivierung zunächst in einen Standby-Modus versetzbar. Insbesondere weist die Empfangseinheit eine optische und/oder eine akustische Energiezustandsanzeige auf. Mittels der erfindungsgemäßen Ausgestaltung kann vorteilhaft eine Aufzeichnung von personenbezogenen Daten ermöglicht werden.

Weiterhin wird vorgeschlagen, dass die Empfangseinheit innerhalb der Bekleidungseinheit angeordnet ist. Insbesondere ist die drahtgebundene oder die drahtlose Empfangseinheit besonders vorteilhaft in die Bekleidungseinheit als eine interne Empfangseinheit integriert, wodurch ein besonders komfortables Arbeiten möglich ist.

Des Weiteren wird vorgeschlagen, dass die Empfangseinheit eine Kommunikationseinheit zur Übertragung von der zumindest einen erfassten personenbezogenen Kenngröße an die Werkzeugmaschine aufweist und die Werkzeugmaschine in Abhängigkeit von der zumindest einen vorbestimmten personenbezogenen Kenngröße deaktivierbar ist. Insbesondere bildet die Empfangseinheit zusammen mit der Kommunikationseinheit eine bidirektionale Sende-/Empfangseinheit, über welche zumindest eine personenbezogene Kenngröße von der Auswerteeinheit erfasst bzw. Daten oder zumindest eine vorbestimmte personenbezogene Kenngröße an die Werkzeugmaschine oder an eine externe Empfangseinheit übertragen werden kann. Unter einer "Kommunikationseinheit" soll in diesem Zusammenhang insbesondere eine Einheit verstanden werden, die zu einer Übertragung bzw. zum Austausch von elektronischen Daten- und/oder Steuersignalen und/oder personenbezogenen Kenngrößen vorgesehen ist. Vorzugsweise soll darunter insbesondere eine Einheit verstanden werden, die zumindest dazu vorgesehen ist, elektronische Daten- und/oder Steuersignale und/oder personenbezogenen Kenngrößen aktiv und/oder passiv, insbesondere auf eine externe Empfangseinheit, zu übertragen. Eine Übertragung der elektronischen Daten- und/oder der Steuersignale und/oder der personenbezogenen Kenngrößen kann dabei sowohl analog als auch digital erfolgen. Ferner kann eine Übertragung sowohl drahtlos als auch drahtgebunden erfolgen. Es sind verschiedene, dem Fachmann als sinnvoll erscheinende drahtlose Übertragungstechniken denkbar, wie beispielsweise über Bluetooth, WLAN, UMTS, NFC oder über eine optische Schnittstelle. Des Weiteren sind verschiedene, dem Fachmann als sinnvoll erscheinende drahtgebundene Übertragungstechniken denkbar. Dabei soll unter "aktiv und/oder passiv" in diesem Zusammenhang insbesondere verstanden werden, dass Daten- und/oder Steuersignale und/oder personenbezogene Kenngrößen vollständig aktiv, vollständig passiv, teilaktiv oder differierend aktiv, passiv und teilaktiv übertragen werden können. Dabei soll unter "passiv" insbesondere verstanden werden, dass die Daten- und/oder Steuersignale und/oder personenbezogenen Kenngrößen zu einer Übertragung von der Empfangseinheit ausgelesen werden. Ferner soll dabei unter "teilaktiv" insbesondere verstanden werden, dass Daten- und/oder Steuersignale und/oder personenbezogene Kenngrößen nur teilweise aktiv übertragen werden. Insbesondere kann die Auswerteeinheit mit der in der Bekleidungseinheit angeordneten Empfangseinheit und/oder mit einer externen Empfangseinheit und/oder mit mehreren externen Empfangseinheiten zeitgleich kommunizieren, wodurch in einem Notfall die Werkzeugmaschine deaktivierbar und zusätzlich zumindest ein Notruf absetzbar ist. Insbesondere weist die Werkzeugmaschine eine Empfangseinheit mit einer Kommunikationseinheit auf, über die eine Kommunikation bzw. eine Deaktivierung der Werkzeugmaschine erfolgen kann. Alternativ können Werkzeugmaschinen ohne eine Kommunikationseinheit aufweisende Empfangseinheit mit einer eine Kommunikationseinheit aufweisenden Empfangseinheit nachgerüstet werden, die zwischen der Werkzeugmaschine und der Stromquelle geschaltet werden kann, wodurch alle Werkzeugmaschinen verwendet und deaktiviert werden können. Hierdurch kann eine erhöhte Sicherheit der Bedienperson gewährleistet werden. Insbesondere kann auf eine kostenintensive Einmannüberwachung verzichtet werden, da die Bedienperson permanent von einer zentralen Überwachungseinrichtung überwacht werden kann. Durch die erfindungsgemäße Vorrichtung können kostenintensive Personalkosten bei gleichzeitiger Verbesserung des Schutzes der Bedienperson gesenkt werden.

Ferner wird vorgeschlagen, dass die Empfangseinheit für eine Personenüberwachung und/oder zum Senden und/oder zum Empfangen eines Notrufsignals vorgesehen ist. Hierdurch ist automatisch ein Notruf absetzbar bzw. es sind in kürzester Zeit zur Rettung der Bedienperson Notfallmaßnahmen einleitbar, auch wenn die Bedienperson bewusstlos oder schwer verletzt ist. Insbesondere kann generell auf eine zweite Person als Aufsichtsperson für die Bedienperson verzichtet werden, insbesondere während eines Bearbeitungsvorgangs mit einer Werkzeugmaschine.

Ferner wird vorgeschlagen, dass die Empfangseinheit dazu vorgesehen ist, die zumindest eine empfangene Kenngröße der Sensoreinheit zu dokumentieren und/oder zu analysieren. Vorzugsweise können zum Speichern personenbezogener Kenngrößen oder Daten externe Empfangseinheiten verwendet werden. Die während des Bearbeitungsvorgangs erfassten personenbezogenen Kenngrößen oder Daten können beispielsweise nachträglich bearbeitet und/oder analysiert werden. Insbesondere die Vitalfunktionen der Bedienperson und/oder die Betriebsdauer bzw. die Laufzeit der Werkzeugmaschine, die als Leih- bzw. als Mietgerät verwendet wird, können ausgelesen und ausgewertet werden. Vorzugsweise können die Vitalfunktionen der Bedienperson in Echtzeit auf einer externen Empfangseinheit überwacht und dokumentiert werden.

Des Weiteren betrifft die Erfindung zudem ein entsprechendes Verfahren zum Schutz vor Verletzungen einer Bedienperson durch eine Werkzeugmaschine mittels einer erfindungsgemäßen Vorrichtung, die zumindest eine an einer Bekleidungseinheit angeordneten Sensoreinheit zu einer Erfassung von zumindest einer Kenngröße, und die zumindest eine Auswerteeinheit zu einer Auswertung der zumindest einen erfassten Kenngröße umfasst. Bei dem erfindungsgemäßen Verfahren erfasst die Sensoreinheit zumindest eine personenbezogene Kenngröße und überträgt diese über die Auswerteeinheit an die Empfangseinheit, die dazu vorgesehen ist, die Werkzeugmaschine in Abhängigkeit der zumindest einen personenbezogenen Kenngröße zu deaktivieren. Durch das erfindungsgemäße Verfahren kann vorteilhaft erreicht werden, dass die Auswerteeinheit mit verschiedenen Werkzeugmaschinen kommunizieren kann, die für einen Austausch von elektronischen Daten- und/oder Steuersignalen und/oder personenbezogenen Kenngrößen vorgesehen sind. Insbesondere ermöglicht das erfindungsgemäße Verfahren, dass die Bedienperson in einem geschlossenen Mensch - Maschine - Sicherheitssystem arbeiten kann. Dadurch kann vorteilhaft erreicht werden, dass bei einer Handhabung der handgeführten Werkzeugmaschine ein aktiver Schutz mit einer hohen Sicherheit für die Bedienperson bereitgestellt werden kann.

Die erfindungsgemäße Vorrichtung soll hierbei nicht auf die oben beschriebene Anwendung und Ausführungsform beschränkt sein. Insbesondere kann die erfindungsgemäße Vorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der einzigen Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Die einzige Figur zeigt eine erfindungsgemäße Vorrichtung mit einer als eine Jacke, als eine Hose, als ein Schutzhelm, als ein Paar Schuhe und als ein Paar Handschuhe ausgeführte erfindungsgemäße Bekleidungseinheit, die eine Sensoreinheit, eine Auswerteeinheit und eine Empfangseinheit umfasst.

### Beschreibung des Ausführungsbeispiels

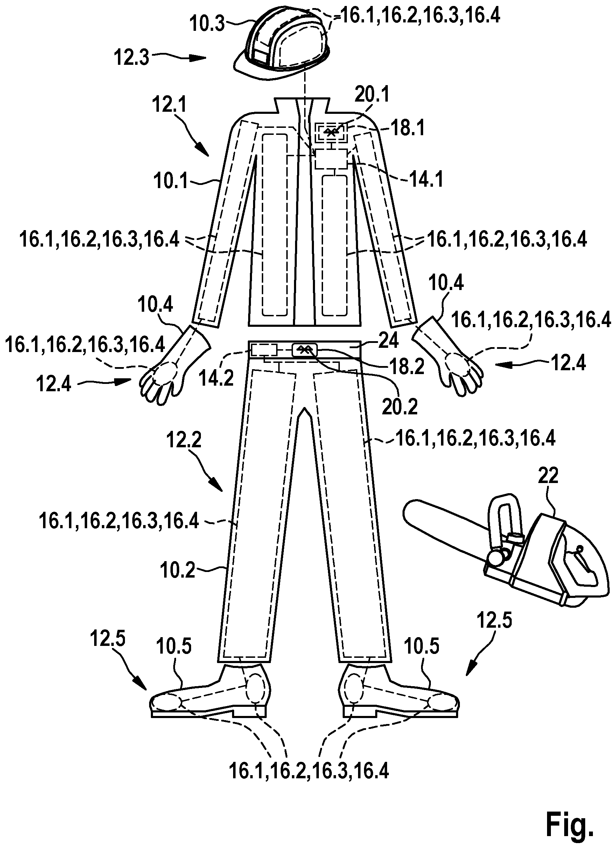

Figur 1 zeigt eine Vorrichtung zum Schutz vor Verletzungen einer Bedienperson durch eine Werkzeugmaschine 22. Die Vorrichtung umfasst eine an einer Bekleidungseinheit 10.1, 10.2, 10.3, 10.4, 10.5 angeordnete Sensoreinheit 12.1, 12.2, 12.3, 12.4, 12.5 zur Erfassung von zumindest einer Kenngröße und eine Auswerteeinheit 14.1, 14.2 zu einer Auswertung der zumindest einen erfassten Kenngröße. Die Sensoreinheit 12.1, 12.2, 12.3, 12.4, 12.5 ist zweckmäßig auf und in der Bekleidungseinheit 10.1, 10.2, 10.3, 10.4, 10.5 angeordnet. Die Bekleidungseinheit 10.1, 10.2, 10.3, 10.4, 10.5 umfasst zumindest eine Jacke. Ferner umfasst die Bekleidungseinheit 10.1, 10.2, 10.3, 10.4, 10.5 zumindest eine Hose. Zudem umfasst die Bekleidungseinheit 10.1, 10.2, 10.3, 10.4, 10.5 zumindest einen Schutzhelm. Des Weiteren umfasst die Bekleidungseinheit 10.1, 10.2, 10.3, 10.4, 10.5 ein Paar Schuhe. Die Bekleidungseinheit 10.1, 10.2, 10.3, 10.4, 10.5 weist ferner ein Paar Handschuhe oder alternativ/zusätzlich andere, einem Fachmann als sinnvoll erscheinende Bekleidungseinheitsteile, wie beispielsweise einen Overall oder ein Armband oder einen Hosengürtel 24 auf. Die Auswerteeinheit 14.1, 14.2 ist jeweils in der Jacke und/oder in der Hose angeordnet, wobei der Schutzhelm, die Schuhe und die Handschuhe keine Auswerteeinheit aufweisen, deren Sensoreinheit 12.3, 12.4, 12.5 jedoch mit einer der beiden Auswerteeinheiten 14.1, 14.2 in der Jacke oder in der Hose drahtlos verbunden ist. Des Weiteren umfasst die Vorrichtung die Sensoreinheit 12.1, 12.2, 12.3, 12.4, 12.5, die dazu ausgebildet ist, personenbezogene Kenngrößen zu erfassen.

Die Sensoreinheit 12.1, 12.2, 12.3, 12.4, 12.5 umfasst zur Erfassung ruckartiger Bewegungen der Bedienperson zumindest ein Beschleunigungssensorelement 16.1. Insgesamt weist die Sensoreinheit 12.1, 12.2, 12.3, 12.4, 12.5 eine Vielzahl an Beschleunigungssensorelementen 16.1 auf. Die Beschleunigungssensorelemente 16.1 sind im äußeren Bereich der Hände und/oder der Füße und/oder des Kopfes in der Bekleidungseinheit 10.1, 10.2, 10.3, 10.4, 10.5 angebracht, insbesondere in den Handschuhen und/oder in den Schuhen. Die mittels der Beschleunigungssensorelemente 16.1 auftretenden personennahen Kenngrößen sind in den Extremitäten am größten. Somit können ruckartige Bewegungen der Extremitäten bereits zu Beginn einer Bewegung besonders schnell erfasst werden. Im vorliegenden Ausführungsbeispiel sind die Beschleunigungssensorelemente 16.1 in den äußeren Ärmelbereichen der Jacke und/oder der Hose angeordnet. Hierbei sind die Beschleunigungssensorelemente 16.1 drahtgebunden mit der Auswerteeinheit 14.1, 14.2 verbunden. Alternativ können die Beschleunigungssensorelemente 16.1 in den Handschuhen, Schuhen oder im Helm angeordnet werden und sind dann mit der Auswerteeinheit 14.1, 14.2 drahtlos verbunden. Es werden vier oder fünf Beschleunigungssensorelemente 16.1 verwendet, die im äußeren Bereich der Hände und der Füße und des Kopfes angeordnet werden.

Ferner umfasst die Sensoreinheit 12.1, 12.2, 12.3, 12.4, 12.5 zur Erfassung einer horizontalen und/oder einer vertikalen Lage und/oder einer geographischen Position der Bedienperson zumindest ein Lagesensorelement 16.2 und/oder ein GPS-Sensorelement 16.3. Das Lagesensorelement 16.2 und/oder das GPS-Sensorelement 16.3 kann sowohl auf der Vorderseite als auch auf der Rückseite der Bekleidungseinheit 10.1, 10.2, 10.3, 10.4, 10.5 angeordnet sein. Die Verbindung des Lagesensorelements 16.2 und/oder des GPS-Sensorelements 16.3 mit der Auswerteeinheit 14.1, 14.2 erfolgt drahtgebunden. Eine drahtlose Verbindung des Lagesensorelementes 16.2 und/oder des GPS-Sensorelements 16.3 mit der Auswerteeinheit 14.1, 14.2 ist jedoch auch denkbar.

Weiterhin umfasst die Sensoreinheit 12.1, 12.2, 12.3, 12.4, 12.5 zur Erfassung einer Vitalfunktion der Bedienperson zumindest ein Vitalsensorelement 16.4. Insgesamt weist die Sensoreinheit 12.1, 12.2, 12.3, 12.4, 12.5 eine Vielzahl an Vitalsensorelementen 16.4 auf. Zur Kontrolle der Vitalfunktion der Bedienperson sind die Vitalsensorelemente 16.4 im vorliegenden Ausführungsbeispiel in oberen und unteren Ärmelbereichen der Jacke zur Erfassung des Blutdruckes und/oder des Pulses als eine Blutdruckmanschette angeordnet. Zusätzlich erfasst eines der Vitalsensorelemente 16.4 eine Körpertemperatur der Bedienperson. Die Vitalsensorelemente 16.4 sind mit der Auswerteeinheit 14.1, 14.2 drahtgebunden verbunden. Eine drahtlose Verbindung der Vitalsensorelemente 16.4 mit der Auswerteeinheit 14.1, 14.2 ist jedoch auch denkbar. Um die von der Sensoreinheit 12.1, 12.2, 12.3, 12.4, 12.5 erfassten und von der Auswerteeinheit 14.1, 14.2 ausgewerteten personenbezogenen Kenngrößen zu empfangen, umfasst die erfindungsgemäße Vorrichtung eine Empfangseinheit 18.1, 18.2. Im vorliegenden Ausführungsbeispiel ist die Empfangseinheit 18.1 in einer Innentasche der Jacke der Bekleidungseinheit 10.1 herausnehmbar angeordnet, wobei die Empfangseinheit 18.2 ebenfalls in einem Hosengürtel 24 der Bekleidungseinheit 10.2 integriert werden kann. Somit bildet die Empfangseinheit 18.1, 18.2 eine interne Empfangseinheit. Die Empfangseinheit 18.1, 18.2 ist drahtgebunden mit der Auswerteeinheit 14.1, 14.2 lösbar verbunden. Eine drahtlose Verbindung der Empfangseinheit 18.1, 18.2 mit der Auswerteeinheit 14.1, 14.2 ist jedoch auch denkbar.

Die Empfangseinheit 18.1, 18.2 ist innerhalb der Bekleidungseinheit 10.1, 10.2, 10.3, 10.4, 10.5 angeordnet. Im vorliegenden Ausführungsbeispiel umfasst die Vorrichtung zumindest eine interne Empfangseinheit 18.1, 18.2 Die interne Empfangseinheit 18.1, 18.2 ist von der Auswerteeinheit 14.1, 14.2 trennbar.

Um eine Kommunikation zwischen der Auswerteeinheit 14.1, 14.2 und der Empfangseinheit 18.1, 18.2 zu ermöglichen, weist die Empfangseinheit 18.1, 18.2 eine Kommunikationseinheit 20.1, 20.2 auf, welche zur Übertragung von der zumindest einen erfassten personenbezogenen Kenngröße an die Werkzeugmaschine 22 und zur Deaktivierung der Werkzeugmaschine 22 in Abhängigkeit von der zumindest einen personenbezogenen Kenngröße vorgesehen ist. Hierzu weist die Kommunikationseinheit 20.1, 20.2 eine drahtlose Bluetooth-Übertragungstechnik auf. Alternativ oder zusätzlich weist die Kommunikationseinheit 20.1, 20.2 zur Übertragung bzw. zur Kommunikation mit der externen Empfangseinheit zusätzlich eine WLAN- Übertragungstechnik auf.

Die Empfangseinheit 18.1, 18.2 ist für eine Personenüberwachung und/oder zum Senden und/oder zum Empfangen eines Notrufsignals ausgebildet. Hierzu ist sowohl die interne Empfangseinheit 18.1, 18.2 als auch die externe Empfangseinheit zum Senden und/oder zum Empfangen eines Notrufsignals vorgesehen, wobei diese getrennt voneinander die Personenüberwachung durchführen und ein Notrufsignal aussenden können. Die erfindungsgemäße Vorrichtung ermöglicht auf Grund der doppelten Sicherheit hierdurch ein Aussenden eines Notrufs, auch wenn eine Störung bei einer der beiden Empfangseinheiten 18.1, 18.2 vorliegt.

Die Empfangseinheit 18.1, 18.2 ist dazu vorgesehen, die empfangenen Kenngrößen der Sensoreinheit 12.1, 12.2, 12.3, 12.4, 12.5 zu dokumentieren und/oder zu analysieren. Sowohl die interne als auch die externe Empfangseinheit speichert alle personenbezogen Kenngrößen während des Bearbeitungsvorgangs mit der Werkzeugmaschine 22. Die Auswerteeinheit 14.1, 14.2 ist dazu vorgesehen, alle mittels der Sensoreinheiten 12.1, 12.2, 12.3, 12.4, 12.5 erfassten personenbezogenen Kenngrößen, die zu einer Unterbrechung bzw. Deaktivierung der Werkzeugmaschine 22 während des Bearbeitungsvorgangs vorgesehen sind, auszuwerten. Die hier nicht dargestellte externe Empfangseinheit ist als ein mobiler Computer mit einer WLAN-Schnittstelle ausgebildet, die mit der WLAN-Schnittstelle der Kommunikationseinheit 20.1, 20.2 kommuniziert.

Um ein Verfahren zum Schutz vor Verletzungen durch eine Werkzeugmaschine 22 bereitzustellen, das einen aktiven Schutz einer Bedienperson ermöglicht, erfasst die Sensoreinheit 12.1, 12.2, 12.3, 12.4, 12.5 die zumindest eine personenbezogene Kenngröße, die von der Auswerteeinheit 14.1, 14.2 auswertbar ist. Die Auswerteeinheit 14.1, 14.2 sendet nach Auswertung der personenbezogene Kenngrößen bei Überschreitung eines in der Auswerteeinheit 14.1, 14.2 hinterlegten Schwellenwerts der zumindest einen Kenngröße der Sensoreinheit 12.1, 12.2, 12.3, 12.4, 12.5 ein Signal an die interne Empfangseinheit 18.1, 18.2 die dazu vorgesehen ist, die Werkzeugmaschine 22 in Abhängigkeit der zumindest einen vorbestimmten personenbezogenen Kenngröße zu deaktivieren.

## Patentansprüche

1. Vorrichtung zum Schutz vor Verletzungen einer Bedienperson durch eine Werkzeugmaschine (22), mit zumindest einer an einer Bekleidungseinheit (10.1, 10.2, 10.3, 10.4, 10.5) angeordneten Sensoreinheit (12.1, 12.2, 12.3, 12.4, 12.5) zu einer Erfassung von zumindest einer Kenngröße, mit zumindest einer Auswerteeinheit (14.1, 14.2) zu einer Auswertung der zumindest einen erfassten Kenngröße, wobei die Sensoreinheit (12.1, 12.2, 12.3, 12.4, 12.5) dazu vorgesehen ist, personenbezogene Kenngrößen zu erfassen, wobei die Sensoreinheit (12.1, 12.2, 12.3, 12.4, 12.5) in ein Gewebe oder Gewirk der Bekleidungseinheit (10.1, 10.2, 10.3, 10.4, 10.5) eingearbeitet ist, und mit einer Empfangseinheit (18.1, 18.2) zum Empfangen von der zumindest einen erfassten personenbezogenen Kenngröße von der Auswerteeinheit (14.1, 14.2), **dadurch gekennzeichnet, dass** die Empfangseinheit (18.1, 18.2) innerhalb der Bekleidungseinheit (10.1, 10.2, 10.3, 10.4, 10.5) angeordnet ist, wobei die Empfangseinheit (18.1, 18.2) eine Kommunikationseinheit (20.1, 20.2) zur Übertragung von der zumindest einen erfassten personenbezogenen Kenngröße an die Werkzeugmaschine (22) aufweist und die Werkzeugmaschine (22) in Abhängigkeit von der zumindest einen vorbestimmten personenbezogenen Kenngröße deaktivierbar ist.

2. Vorrichtung nach Anspruch 1, **dadurch gekennzeichnet, dass** die Sensoreinheit (12.1, 12.2, 12.3, 12.4, 12.5) zur Erfassung ruckartiger Bewegungen der Bedienperson zumindest ein Beschleunigungssensorelement (16.1) umfasst.

3. Vorrichtung nach Anspruch 1 oder 2, **dadurch gekennzeichnet, dass** die Sensoreinheit (12.1, 12.2, 12.3, 12.4, 12.5) zur Erfassung einer horizontalen und/oder einer vertikalen Lage und/oder einer geographischen Position der Bedienperson zumindest ein Lagesensorelement (16.2) und/oder ein GPS-Sensorelement (16.3) umfasst.

4. Vorrichtung nach einem der vorhergehenden Ansprüche, **dadurch gekennzeichnet, dass** die Sensoreinheit (12.1, 12.2, 12.3, 12.4, 12.5) zur Erfassung einer Vitalfunktion der Bedienperson zumindest ein Vitalsensorelement (16.4) umfasst.

5. Vorrichtung nach einem der vorhergehenden Ansprüche, **dadurch gekennzeichnet, dass** die Empfangseinheit (18.1, 18.2) für eine Personenüberwachung und/oder zum Senden und/oder zum Empfangen eines Notrufsignals vorgesehen ist.

6. Vorrichtung nach einem der vorhergehenden Ansprüche, **dadurch gekennzeichnet, dass** die Empfangseinheit (18.1, 18.2) dazu vorgesehen ist, die zumindest eine empfangene Kenngröße der Sensoreinheit (12.1, 12.2, 12.3, 12.4, 12.5) zu dokumentieren und/oder zu analysieren.

7. Verfahren zum Schutz vor Verletzungen einer Bedienperson durch eine Werkzeugmaschine (22) mittels einer Vorrichtung, die zumindest eine an einer Bekleidungseinheit (10.1, 10.2, 10.3, 10.4, 10.5) angeordnete Sensoreinheit (12.1, 12.2, 12.3, 12.4, 12.5) zu einer Erfassung von zumindest einer Kenngröße, und die zumindest eine Auswerteeinheit (14.1, 14.2) zu einer Auswertung der zumindest einen erfassten Kenngröße und eine Empfangseinheit (18.1, 18.2) zum Empfangen von der zumindest einen erfassten personenbezogenen Kenngröße von der Auswerteeinheit (14.1, 14.2) umfasst, wobei die Sensoreinheit (12.1, 12.2, 12.3, 12.4, 12.5) in ein Gewebe oder Gewirk der Bekleidungseinheit (10.1, 10.2, 10.3, 10.4, 10.5) eingearbeitet ist, **dadurch gekennzeichnet, dass** die Empfangseinheit (18.1, 18.2) innerhalb der Bekleidungseinheit (10.1, 10.2, 10.3, 10.4, 10.5) angeordnet ist, wobei die Empfangseinheit (18.1, 18.2) eine Kommunikationseinheit (20.1, 20.2) zur Übertragung von der zumindest einen erfassten personenbezogenen Kenngröße an die Werkzeugmaschine (22) aufweist, wobei die Sensoreinheit (12.1, 12.2, 12.3, 12.4, 12.5) personenbezogene Kenngrößen erfasst und über die Auswerteeinheit (14.1, 14.2) an eine Empfangseinheit (18.1, 18.2) überträgt, die dazu vorgesehen ist, die Werkzeugmaschine (22) in Abhängigkeit der zumindest einen personenbezogenen Kenngröße zu deaktivieren.

## Claims

1. Device for protecting an operator from being injured by a machine tool (22), comprising at least one sensor unit (12.1, 12.2, 12.3, 12.4, 12.5) arranged on a clothing unit (10.1, 10.2, 10.3, 10.4, 10.5) for detecting at least one characteristic variable and comprising at least one evaluation unit (14.1, 14.2) for evaluating the at least one detected characteristic variable, wherein the sensor unit (12.1, 12.2, 12.3, 12.4, 12.5) is provided to detect person-related characteristic variables, wherein the sensor unit (12.1, 12.2, 12.3, 12.4, 12.5) is worked into a woven or knitted fabric of the clothing unit (10.1, 10.2, 10.3, 10.4, 10.5), and comprising a reception unit (18.1, 18.2) for receiving the at least one detected person-related characteristic variable from the evaluation unit (14.1, 14.2), **characterized in that** the reception unit (18.1, 18.2) is arranged within the clothing unit (10.1, 10.2, 10.3, 10.4, 10.5), wherein the reception unit (18.1, 18.2) has a communication unit (20.1, 20.2) for transferring the at least one detected person-related characteristic variable to the machine tool (22) and the machine tool (22) is deactivatable in a manner dependent on the at least one predetermined person-related characteristic variable.

2. Device according to Claim 1, **characterized in that** the sensor unit (12.1, 12.2, 12.3, 12.4, 12.5) comprises at least one acceleration sensor element (16.1) for detecting jerky movements of the operator.

3. Device according to Claim 1 or 2, **characterized in that** the sensor unit (12.1, 12.2, 12.3, 12.4, 12.5) comprises at least one position sensor element (16.2) and/or a GPS sensor element (16.3) for detecting a horizontal and/or a vertical position and/or a geographical location of the operator.

4. Device according to one of the preceding claims, **characterized in that** the sensor unit (12.1, 12.2, 12.3, 12.4, 12.5) comprises at least one vital sensor element (16.4) for detecting a vital function of the operator.

5. Device according to one of the preceding claims, **characterized in that** the reception unit (18.1, 18.2) is provided for monitoring a person and/or for transmitting and/or receiving an emergency signal.

6. Device according to one of the preceding claims, **characterized in that** the reception unit (18.1, 18.2) is provided to document and/or analyze the at least one received characteristic variable from the sensor unit (12.1, 12.2, 12.3, 12.4, 12.5).

7. Method for protecting an operator from being injured by a machine tool (22) by means of a device which comprises at least one sensor unit (12.1, 12.2, 12.3, 12.4, 12.5) arranged on a clothing unit (10.1, 10.2, 10.3, 10.4, 10.5) for detecting at least one characteristic variable and which comprises at least one evaluation unit (14.1, 14.2) for evaluating the at least one detected characteristic variable and a reception unit (18.1, 18.2) for receiving the at least one detected person-related characteristic variable from the evaluation unit (14.1, 14.2), wherein the sensor unit (12.1, 12.2, 12.3, 12.4, 12.5) is worked into a woven or knitted fabric of the clothing unit (10.1, 10.2, 10.3, 10.4, 10.5), **characterized in that** the reception unit (18.1, 18.2) is arranged within the clothing unit (10.1, 10.2, 10.3, 10.4, 10.5), wherein the reception unit (18.1, 18.2) has a communication unit (20.1, 20.2) for transferring the at least one detected person-related characteristic variable to the machine tool (22), wherein the sensor unit (12.1, 12.2, 12.3, 12.4, 12.5) detects person-related characteristic variables and transfers these by way of the evaluation unit (14.1, 14.2) to a reception unit (18.1, 18.2) provided to deactivate the machine tool (22) in a manner dependent on the at least one person-related characteristic variable.

## Revendications

1. Dispositif de protection d'un opérateur contre les blessures par une machine-outil (22), comportant au moins une unité à capteurs (12.1, 12.2, 12.3, 12.4, 12.5) disposée sur une unité de vêtement (10.1, 10.2, 10.3, 10.4, 10.5) et servant à détecter au moins un paramètre, et au moins une unité d'évaluation (14.1, 14.2) servant à évaluer ledit au moins un paramètre détecté, dans lequel l'unité à capteurs (12.1, 12.2, 12.3, 12.4, 12.5) est prévue pour détecter des paramètres liés à l'opérateur, dans lequel l'unité à capteurs (12.1, 12.2, 12.3, 12.4, 12.5) est incorporée dans un tissu tissé ou tricoté de l'unité de vêtement (10.1, 10.2, 10.3, 10.4, 10.5), et comportant une unité de réception (18.1, 18.2) servant à recevoir ledit au moins un paramètre détecté lié à l'opérateur en provenance de l'unité d'évaluation (14.1, 14.2), **caractérisé en ce que** l'unité de réception (18.1, 18.2) est disposée à l'intérieur de l'unité de vêtement (10.1, 10.2, 10.3, 10.4, 10.5), dans lequel l'unité de réception (18.1, 18.2) comporte une unité de communication (20.1, 20.2) servant à transmettre ledit au moins un paramètre détecté lié à l'opérateur à la machine-outil (22) et la machine-outil (22) peut être désactivée en fonction dudit au moins un paramètre prédéterminé lié à l'opérateur.

2. Dispositif selon la revendication 1, **caractérisé en ce que** l'unité à capteurs (12.1, 12.2, 12.3, 12.4, 12.5) comprend au moins un élément capteur d'accélération (16.1) servant à détecter des mouvements saccadés de l'opérateur.

3. Dispositif selon la revendication 1 ou 2, **caractérisé en ce que** l'unité à capteurs (12.1, 12.2, 12.3, 12.4, 12.5) comprend au moins un élément capteur de position (16.2) et/ou un élément capteur GPS (16.3) servant à détecter une position horizontale et/ou une position verticale et/ou géographique de l'opérateur.

4. Dispositif selon l'une des revendications précédentes, **caractérisé en ce que** l'unité à capteurs (12.1, 12.2, 12.3, 12.4, 12.5) comprend au moins un élément capteur vital (16.4) servant à détecter une fonction vitale de l'opérateur.

5. Dispositif selon l'une des revendications précédentes, **caractérisé en ce que** l'unité de réception (18.1, 18.2) est prévue pour surveiller l'opérateur et/ou pour émettre et/ou recevoir un signal d'appel de secours.

6. Dispositif selon l'une des revendications précédentes, **caractérisé en ce que** l'unité de réception (18.1, 18.2) est prévue pour documenter et/ou analyser ledit au moins un paramètre reçu en provenance de l'unité à capteurs (12.1, 12.2, 12.3, 12.4, 12.5).

7. Procédé de protection d'un opérateur contre les blessures par une machine-outil (22) au moyen d'un dispositif qui utilise au moins une unité à capteurs (12.1, 12.2, 12.3, 12.4, 12.5) disposée sur une unité de vêtement (10.1, 10.2, 10.3, 10.4, 10.5) pour détecter au moins un paramètre et qui comprend au moins une unité d'évaluation (14.1, 14.2) servant à évaluer ledit au moins un paramètre détecté et une unité de réception (18.1, 18.2) servant à recevoir ledit au moins un paramètre détecté lié à l'opérateur en provenance de l'unité d'évaluation (14.1, 14.2), dans lequel l'unité à capteurs (12.1, 12.2, 12.3, 12.4, 12.5) est incorporée dans un tissu tissé ou tricoté de l'unité de vêtement (10.1, 10.2, 10.3, 10.4, 10.5), **caractérisé en ce que** l'unité de réception (18.1, 18.2) est disposée à l'intérieur de l'unité de vêtement (10.1, 10.2, 10.3, 10.4, 10.5), dans lequel l'unité de réception (18.1, 18.2) comporte une unité de communication (20.1, 20.2) servant à transmettre à la machine-outil (22) ledit au moins un paramètre détecté lié à l'opérateur, dans lequel l'unité à capteurs (12.1, 12.2, 12.3, 12.4, 12.5) détecte des paramètres liés à l'opérateur et les transmet par l'intermédiaire de l'unité d'évaluation (14.1, 14.2) à une unité de réception (18.1, 18.2) qui est prévue pour désactiver la machine-outil (22) en fonction dudit au moins un paramètre lié à l'opérateur.
